# FASCICULE DE BREVET EUROPEEN

(11) **EP 0 652 460 B1**
(45) Date de publication et mention de la délivrance du brevet: **03.07.2002**
(21) Numéro de dépôt: 94117140.7
(22) Date de dépôt: 29.10.1994
(51) Int. Cl.: G02F 1/1343

(54) **Dispositif d'affichage à cristaux liquides**
Anzeigevorrichtung mit Flüssigkristallen
Liquid crystal display

(30) Priorité: 04.11.1993 FR 9313121
(43) Date de publication de la demande: 10.05.1995
(73) Titulaire: Eta SA Fabriques d'Ebauches, 2540 Grenchen (CH)
(72) Inventeur: Paratte, Daniel, CH-2003 Neuchâtel (CH)
(74) Mandataire: Patry, Didier Marcel Pierre

(56) Documents cités:
- EP-A- 0 297 264
- GB-A- 2 134 684
- US-A- 4 270 846
- PATENT ABSTRACTS OF JAPAN vol. 4, no. 35 (P-3) (517) 25 Mars 1980 & JP-A-55 009 169 (CITIZEN KOKEI K.K.) 23 Janvier 1980

## Description

La présente invention concerne un dispositif d'affichage à cristaux liquides et plus particulièrement un tel dispositif destiné à afficher des symboles d'affichage fixes en même temps que des symboles d'affichage changeants.

Les dispositifs d'affichage actuels à cristaux liquides ont une structure relativement simple. Ils sont formés essentiellement par deux substrats espacés, dont l'un au moins est transparent, un composé à cristaux liquides enfermé entre les substrats et des électrodes conductrices prévues sur les faces opposées en regard des substrats et disposées de façon à représenter les différents symboles d'affichage. Une source de tension est montée de façon à appliquer un champ entre les jeux d'électrodes à l'intérieur de l'espace formé entre les substrats. L'application du champ agit sur le composé formé par les cristaux liquides et change de ce fait ses caractéristiques de transmission ou de réflexion de la lumière.

Ces dispositifs d'affichage à cristaux liquides ont été utilisés dans de nombreuses applications, en particulier dans les calculatrices de poche, les montres-bracelets, les instruments de mesure, les récepteurs d'appel de personnes et divers autres instruments électroniques. L'avantage de tels dispositifs d'affichage réside en ce qu'ils peuvent être directement commandés par des microplaquettes de circuits intégrés et en ce qu'ils peuvent afficher divers symboles dans un espace réduit.

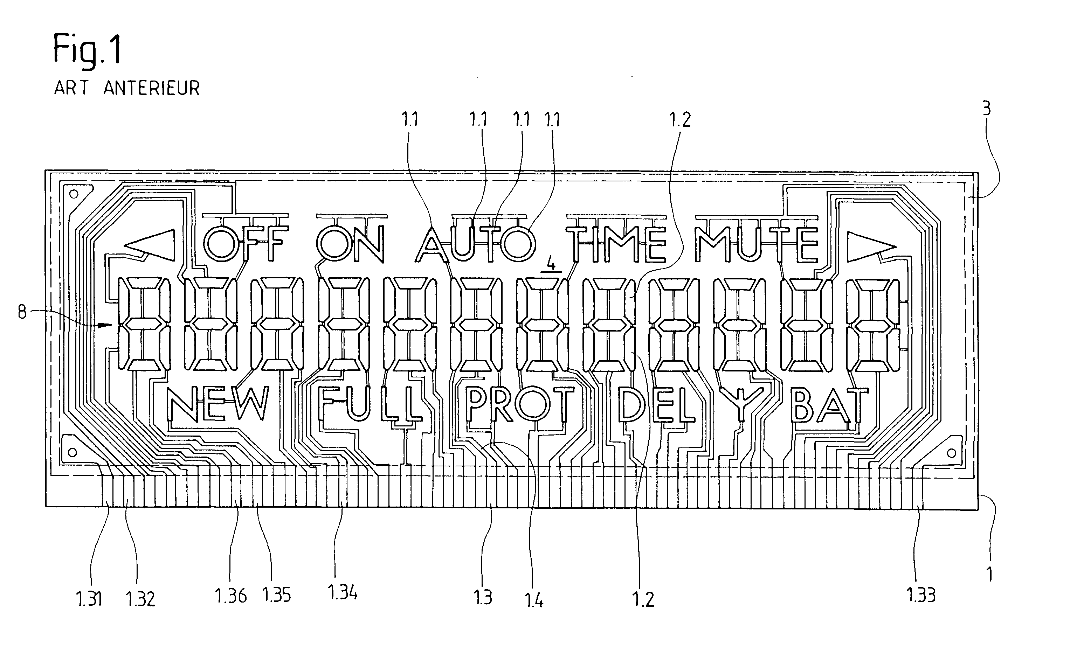

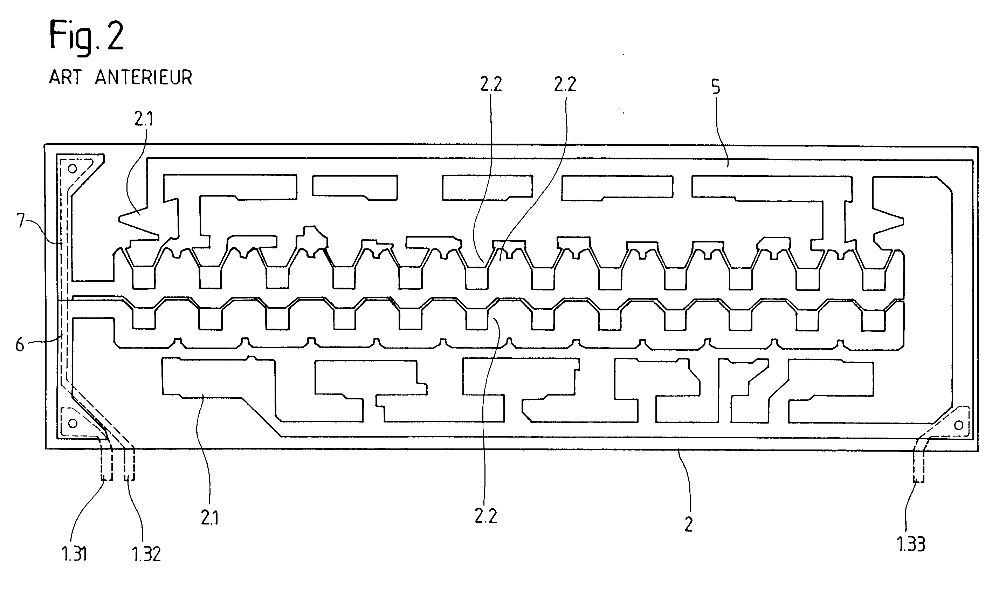

Les figures 1 et 2 sont des vues en plan respectivement de la face avant d'un premier substrat 1 et de la face arrière d'un deuxième substrat 2 d'un dispositif d'affichage à cristaux liquides d'un type connu. Ces deux substrats ou plaques 1 et 2 sont chacun munis d'un jeu d'électrodes. Les électrodes sur chaque plaque sont subdivisées en celles qui forment des symboles fixes et en celles qui sont réparties en des groupes de sept segments en forme de "8".

Puisque elles sont nombreuses, seulement quelques-unes des électrodes sur les deux plaques ont été designées par des références. Ainsi, les électrodes sur les plaques 1 et 2 qui forment des symboles fixes, tel que les mots "OFF", "ON" et "AUTO", sont respectivement designées par les références 1.1 et 2.1, alors que les électrodes qui formant des groupes de sept segments sont designées par les références 1.2 et 2.2.

Toutes les électrodes sont agencées à l'intérieur d'un cadre de scellement 3 qui forme, avec les deux plaques 1 et 2, une cellule à l'intérieur de laquelle est enfermée une couche de cristaux liquides 4. Des bornes 1.3 sont déposées sur la plaque avant 1, à l'extérieur du cadre 3, des pistes conductrices 1.4 menent de ces bornes vers les électrodes 1.1 et 1.2. Certaines bornes 1.3, designées par les références 1.31, 1.32 et 1.33, sont connectées aux électrodes sur la plaque 2 par l'intermédiaire de ponts de connexion (non représentés A, B et C) qui relient les deux substrats l'un à l'autre au niveau du cadre 3.

Les électrodes de la plaque 2 sont subdivisées en trois parties, auxquelles sont respectivement connectées les trois bornes 1.31, 1.32 et 1.33. La première partie 5 réunit toutes les électrodes 2.1 formant des symboles fixes et toutes les électrodes 2.2 formant un premier segment des sept segments en forme de "8". La deuxième partie 6 réunit toutes les électrodes 2.2 formant des deuxième, troisième et quatrième segments des sept segments en forme de "8". La troisième partie 7 réunit toutes les électrodes 2.2 formant des cinquième, sixième et septième segments des sept segments en forme de "8". Les parties 5, 6 et 7 sont respectivement reliées aux bornes 1.33, 1.31 et 1.32.

Pour afficher un symbole fixe, par exemple le mot "ON", on applique une tension entre l'électrode 7 et une borne 1.34, qui est reliée indirectement aux électrodes 1.1 ayant la forme du mot "ON". Le champ résultant créé entre les parties superposées des électrodes 1.1 formant le mot "ON" et de l'électrode 7, change les caractéristiques optiques du dispositif d'affichage à cristaux liquides de manière à afficher ce mot.

Pour afficher un symbole changeant aux moyens des électrodes 2.2 formant les groupes de sept segments en forme de "8", par exemple pour afficher un "3" à l'endroit sur la plaque 1 designé par la référence 8, on applique une tension entre les bornes 1.35 et 1.36 et les bornes 1.31, 1.32 et 1.33. Comme dans le cas précédent, le champ résultant entre les parties superposées des électrodes 1.2 formant le groupe de sept segments à l'extrême gauche de la plaque 1 (comme vu sur la figure 1) et des électrodes 5, 6 et 7, change les caractéristiques optiques du dispositif d'affichage à cristaux liquides de façon à afficher le chiffre "3" à l'endroit 8.

Bien que le dispositif décrit ci-dessus soit capable d'afficher, à la fois, des symboles fixes et des symboles changeants, il existe actuellement un besoin d'une plus grande flexibilité dans le type information pouvant être affiché par la partie capable d'afficher des symboles changeants. En utilisant des groupes d'électrodes à sept segments en forme de "8", le type d'information pouvant être affiché par cette partie est limitée aux représentations simples alphanumériques, c'est-à-dire les chiffres "0" à "9", le symbole "-" et les lettres de l'alphabet. De plus, il existe une confusion éventuelle entre certains de ces symboles, par exemple aussi bien entre le "B" et le "8", qu'entre le "2" et le "Z".

Le brevet US 4 522 691 décrit un dispositif d'affichage ayant plusieurs électrodes d'affichage formées en parallèle sur la surface d'un premier substrat et plusieurs contre-électrodes formées en parallèle sur la surface d'un deuxième substrat espacé du premier substrat. Les électrodes d'affichage et les contre-électrodes sont orientées en sorte que leurs directions se croisent à angle droit, formant ainsi une matrice d'éléments d'affichage dont chaque élément peut être sélectionné en appliquant sélectivement une tension de commutation entre l'une des électrodes d'affichage et l'une des contre-électrodes. Ce dispositif constitue un affichage matriciel, qui peut afficher des symboles changeants selon un système connu de multiplexage, offrant ainsi une plus grande flexibilité dans le type de symboles pouvant être affiché, que celle réalisable avec un affichage à sept segments.

Cependant, le dispositif d'affichage décrit dans ce document ne peut être réalisé selon la construction adoptée pour le dispositif d'affichage illustré aux figures 1 et 2 décrites ci-dessus. En considérant la figure 3 du brevet US 4 522 691, on s'aperçoit qu'aussi bien les électrodes d'affichage que les contre-électrodes traversent la surface entière des substrats sur lesquels elles sont respectivement formées de sorte qu'elles en occupent tout l'espace.

Si l'on remplaçait sur les figures 1 et 2 les électrodes 1.2 et 2.2 destinées à afficher de l'information changeante par les électrodes d'affichage et les contre-électrodes du brevet US 4 522 691, il n'y aurait plus d'espace sur les deux substrats pour y agencer les électrodes 1.1 et 2.1 destinées à afficher de l'information fixe. Ce problème est particulièrement gênant notamment dans le domaine horloger et dans d'autres applications, comme les récepteurs d'appel de personnes, car dans ces cas, les dimensions du dispositif d'affichage sont en général petites, ce qui impose des contraintes sévères à la disposition des électrodes.

Toutefois, il peut être souhaitable de pouvoir afficher des symboles fixes tels qu'illustrés sur la figure 1 au moyen d'un affichage matriciel du type par lequel on peut afficher de l'information changeante. Cet agencement présenterait cependant l'inconvénient d'exiger un logiciel compliqué pour assurer l'affichage d'un symbole dont la forme reste toujours fixe. En outre, les dimensions et la résolution des symboles fixes et des symboles changeants doivent alors nécessairement être les mêmes, ce qui n'est pas toujours souhaitable si, par exemple, les symboles fixes ont une signification moins importante que celle des symboles changeants.

Un autre dispositif d'affichage, tel que définit dans la préambule de la revendication 1, est connu du document US-A-4 270 846.

En conséquence, un but de l'invention est de réaliser un dispositif d'affichage à cristaux liquides qui améliore l'art antérieur ou qui en surmonte les désavantages.

Un autre but de l'invention est de réaliser un dispositif d'affichage à cristaux liquides perfectionné permettant l'affichage aussi bien de symboles changeants que de symboles fixes.

L'invention a donc pour objet un dispositif d'affichage tel que définit dans la revendication 1.

L'invention sera décrite ci-après de façon plus détaillée en se référant aux dessins annexés, donnés uniquement à titre d'exemple non-limitatif et dans lesquels :
la figure 1, déjà décrite, est une vue en plan d'un premier substrat d'un dispositif connu d'affichage à cristaux liquides, comportant des électrodes d'affichage formées sur l'une de ses faces;
la figure 2, également déjà décrite, est une vue en plan d'un deuxième substrat du dispositif d'affichage à cristaux liquides de la figure 1 et comportant des contre-électrodes formées sur l'une de ses faces;

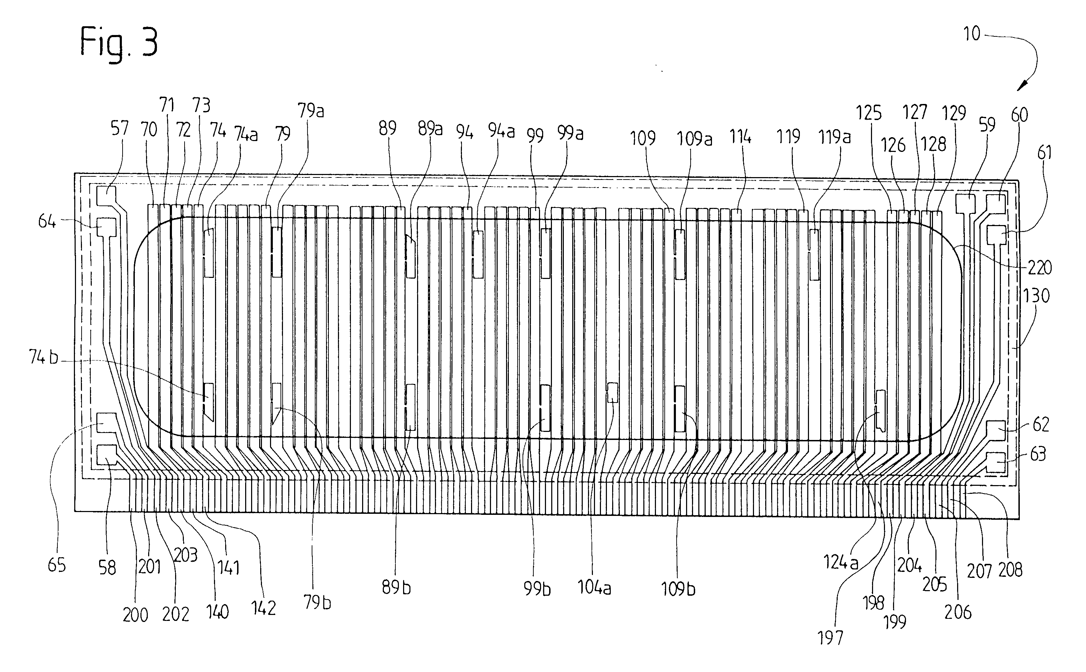

la figure 3 est une vue en plan d'un premier substrat d'un premier mode de réalisation du dispositif d'affichage à cristaux liquides selon la présente invention, ce substrat comportant des électrodes d'affichage formées sur l'une de ses faces;

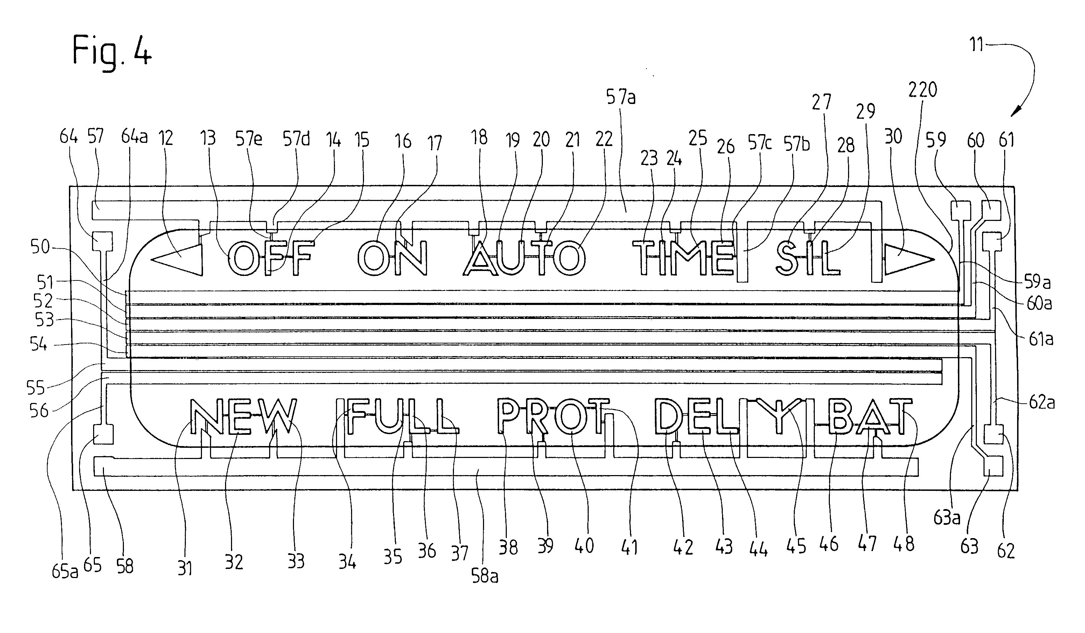

la figure 4 est une vue en plan d'un deuxième substrat du dispositif d'affichage à cristaux liquides de la figure 3, ce deuxième substrat comportant des contre-électrodes formées sur l'une de ses faces; et

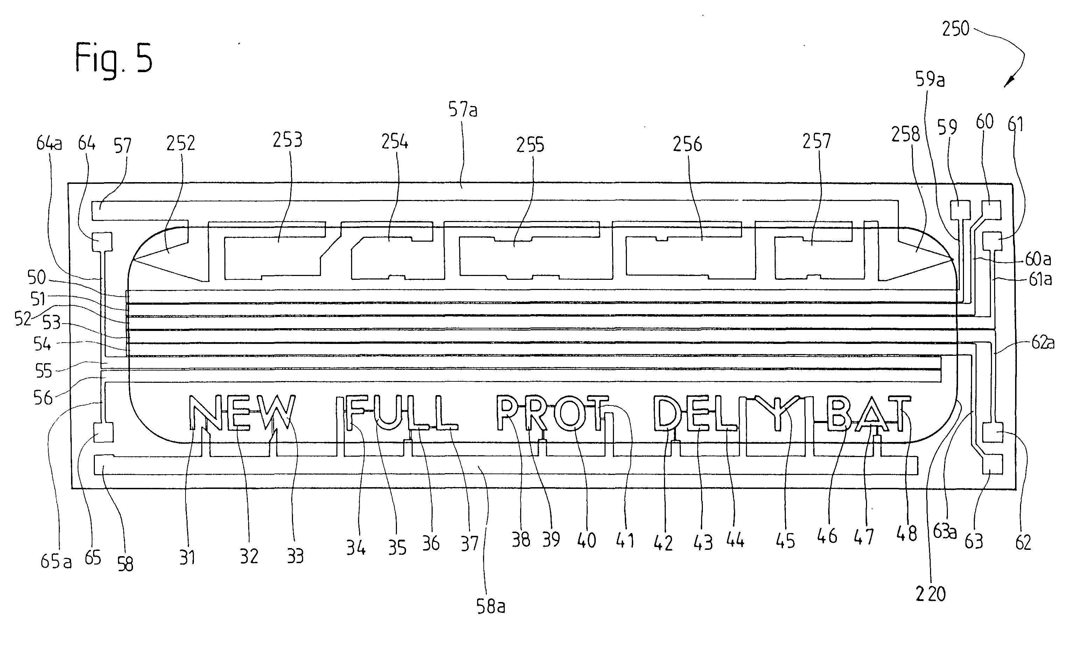

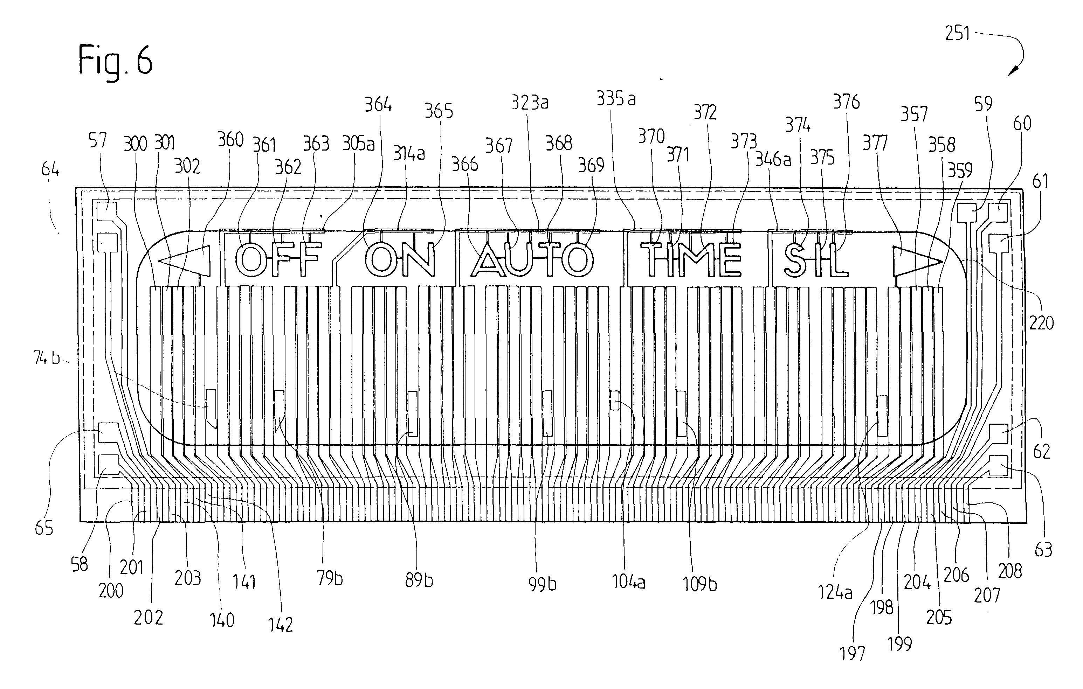

les figures 5 et 6 sont des vues en plan de premier et second substrats d'un second mode de réalisation du dispositif d'affichage à cristaux liquides de l'invention, ces substrats comportant également respectivement des électrodes d'affichage et des contre-électrodes formées sur l'une de leurs faces.

Sur les figures 3 et 4 auxquelles on se référera maintenant, on a représenté des vues en plan d'un premier substrat avant 10 et d'un deuxième substrat arrière 11 d'un premier mode de réalisation d'un dispositif d'affichage à cristaux liquides selon la présente invention. Les substrats 10 et 11 sont de préférence réalisés en verre ou en une matière plastique telle que le MYLAR ®, un polycarbonate ou le Plexiglass ®. Ils sont chacun munis d'électrodes au moins partiellement superposées de façon à permettre l'affichage des divers symboles lorsqu'une tension de commutation est appliquée sélectivement entre elles.

Des électrodes d'affichage destinées à former des symboles fixes sont formées sur le substrat 11. Ces électrodes sont designées par les références 12 à 48 et ont chacune la forme d'une lettre ("O", "F", "F", etc.) ou d'un autre symbole fixe.

Sur la même face de ce substrat 11, est formé un ensemble de secondes électrodes d'affichage allongées destinées à former des symboles changeants. Ces électrodes sont designées par les références 50 à 56 et juxtaposées sur la surface du substrat 11, selon une première direction générale. De préférence, ces secondes électrodes sont généralement rectilignes et s'étendent sur sensiblement la longueur entière de la surface du substrat 11.

Toutes les électrodes 12 à 30 sont reliées ensemble à un pont de connexion 57 par une piste conductrice 57a, tandis que toutes les électrodes 31 à 48 sont reliées ensemble à un pont e connexion 58 par une piste conductrice 58a. Les électrodes 50 à 56 sont respectivement connectées à des ponts de connexion 59 à 65 par des pistes conductrices 59a à 65a.

Par ailleurs, un ensemble de contre-électrodes allongées destinées à former des symboles changeants en combinaison avec les électrodes 50 à 56, est formé sur l'une des faces du substrat 10. Ces électrodes sont designées par les références 70 à 129 et juxtaposées sur la surface du substrat 10 selon une deuxième direction générale perpendiculaire à la première direction générale. De préférence, les contre-électrodes sont généralement rectilignes et s'étendent sur sensiblement la largeur entière de la surface du substrat 10.

Toutes les électrodes 70 à 129 sont prévues à l'intérieur d'un cadre de scellement 130 qui forme, avec les deux substrats 10 et 11, une cellule à l'intérieur de laquelle est enfermée une couche de cristaux liquides. Des bornes 140 à 199 sont disposées sur le substrat 10, à l'extérieur du cadre 130, et respectivement reliées aux électrodes 70 à 129. En outre, des bornes 200 à 208 sont également disposées sur le substrat 10 pour assurer la connexion avec les électrodes sur le substrat 11, respectivement par l'intermédiaire des ponts de connexion 58, 65, 64, 57, 59, 60, 61, 62 et 63.

Les électrodes 70 à 129 et 50 à 56 du dispositif d'affichage à cristaux liquides représenté aux figures 3 et 4 forment un affichage matriciel d'éléments d'affichage, dont une combinaison d'éléments peut être sélectionnée pour permettre l'affichage de divers symboles changeants.

Par ailleurs, certaines des contre-électrodes 70 à 129 sont superposées à des électrodes d'affichage 12 à 48 de façon à fonctionner comme une contre-électrode pour coopérer avec elles de sorte que l'on peut se passer de contre-électrodes qui seraient associées exclusivement à ces électrodes 12 à 48.

Les contre-électrodes formées sur le substrat 10 peuvent être subdivisées en plusieurs groupes dont chacun, par exemple celui formé par les électrodes 70 à 74, est destiné à afficher un symbole d'affichage particulier. Afin d'améliorer la lisibilité des symboles affichés, ces groupes d'électrodes peuvent être espacés latéralement l'un par rapport à l'autre. Au cas où au moins une partie de l'une des électrodes d'affichage 12 à 48 se trouve superposée à l'espace entre deux groupes d'électrodes, l'ensemble de contre-électrodes du substrat 10 peut comprendre en outre au moins une électrode partielle située dans cet espace pour fonctionner comme une partie de contre-électrode coopérant avec l' électrode d'affichage 12 à 48 concernée.

Dans le mode de réalisation illustré sur la figure 3, des contre-électrodes partielles sont designées par les références 74a, 74b, 79a, 79b, 89a, 89b, 94a, 99a, 99b, 104a, 109a, 109b, 119a et 124a. Chacune de ces contre-électrodes partielles peut être reliée par une piste conductrice (non représentée) à au moins l'une des contre-électrodes adjacentes.

Le dispositif d'affichage illustré sur les figures 3 et 4 peut comprendre en outre une fenêtre d'affichage ménagée dans un cadre qui est designé par la référence 220. Ce cadre 220 permet la lecture de la partie centrale des substrats 10 et 11, tout en cachant à la vue les parties extérieures des substrats 10 et 11. Il en résulte que les superpositions des pistes conductrices et des électrodes sur les deux substrats, qui autrement créeraient des lignes lisibles en présence d'une tension de commutation, sont cachés derrière le cadre 220.

Si les contre-électrodes formées sur le substrat 10 sont subdivisées en plusieurs groupes séparés latéralement les uns par rapport aux autres, une ou plusieurs parties des pistes conductrices 57a et 58a sur le substrat 11 peuvent s'étendre dans les espaces séparant ces groupes d'électrodes afin de pouvoir s'approcher des électrodes d'affichage 12 à 48. Par exemple, on voit sur la figure 4 une partie 57b de la piste conductrice 57a qui s'étend dans l'espace séparant les groupes d'électrodes 110 à 114 et 115 à 119, (voir également la figure 3).

Il en résulte que la partie étroite 57c de la piste conductrice 57a qui est superposée à la contre-électrode 114 peut être de longueur minimale, les dimensions du reste de la piste conductrice 57a pouvant être maximale. Ainsi, la piste conductrice 57a peut être réalisée avec plus de fiabilité sans risques de rupture. Si une électrode partielle, par exemple l'électrode partielle 79a, se trouve entre deux groupes de contre-électrodes, la partie 57d de la piste conductrice 57a dont les dimensions sont maximales peut s'étendre dans l'espace de séparation jusqu'au bord de l'électrode partielle 79a avant que sa largeur ne soit réduite en la partie 57e.

Dans le mode de réalisation de l'invention illustré sur les figures 3 et 4, les électrodes d'affichage destinées à afficher des symboles fixes sont situées sur les côtés latéraux de l'ensemble d'électrodes d'affichage destiné à afficher des symboles changeants. Sur les figures 5 et 6, auxquelles on se référera maintenant, on a représenté des vues en plan d'un premier substrat avant 250 et d'un deuxième substrat arrière 251 sur lequel des électrodes d'affichage destinées à afficher des symboles fixes sont situées uniquement sur l'un des deux côtés latéraux de l'ensemble d'électrodes d'affichage destiné à afficher les symboles changeants.

De même que le substrat 11, on voit sur la figure 5 que le substrat 250 présente sur l'une de ses faces des premières électrodes d'affichage destinées à former des symboles fixes telles que les électrodes 31 à 48, en forme de lettre ("N", "E", "W", etc.) ou d'autres symboles fixes, et de secondes électrodes d'affichage designées par les références 252 à 258. De préférence, ces secondes électrodes d'affichage 252 à 257 ont chacune une forme correspondant à au moins un groupe de plusieurs contre-électrodes destinée à afficher les symboles fixes. Ces contre-électrodes sont formées sur le substrat 251.

De plus, sur cette même face du substrat 250 est formé un ensemble de secondes électrodes d'affichage 50 à 56 allongées destinées à former des symboles changeants et qui sont juxtaposées sur la face du substrat 250 selon une première direction générale.

Dans ce mode de réalisation de l'invention, toutes les électrodes 252 à 258 sont reliées ensemble au pont de connexion 57 par la piste conductrice 57a. De la même façon, toutes les électrodes 31 à 48 sont reliées ensemble au pont de connexion 58 par la piste conductrice 58a et les électrodes 50 à 56 sont respectivement connectées aux ponts de connexion 59 à 65 par les pistes conductrices 59a à 65a.

Par ailleurs, l'une des faces du substrat 251 présente un ensemble de contre-électrodes allongées destinées à former des symboles changeants en combinaison avec les électrodes 50 à 56. Ces contre-électrodes sont designées par les références 300 à 359 et sont juxtaposées sur la face du substrat 251 selon une deuxième direction générale perpendiculaire à la première direction générale. De préférence, ces contre-électrodes sont généralement rectilignes et s'étendent seulement sur une partie de la largeur de la surface du substrat 250.

En outre des bornes 140 à 199 sont respectivement reliées aux électrodes 300 à 359, tandis que d'autres bornes 200 à 208 sont déposées sur le substrat 251 pour assurer la connexion avec les électrodes du substrat 250, respectivement par l'intermédiaire de ponts de connexion 58, 65, 64, 57, 59, 60, 61, 62 et 63.

Des contre-électrodes destinées à former des symboles fixes sont formées sur la même face du substrat 251. Ces contre-électrodes sont designées par les références 360 à 378 et elles ont chacune la forme d'une lettre ("O", "F", "F", etc.) ou d'un autre symbole fixe. De préférence, elles sont toutes situées sur le même côté latéral de l'ensemble d'électrodes d'affichage 50 à 56.

Certaines des contre-électrodes 300 à 359 sont superposées à des électrodes d'affichage 31 à 48 qui se trouvent sur le côté latéral opposé de l'ensemble d'électrodes d'affichage 50 à 56 de manière à fonctionner respectivement comme contre-électrode pour celles-ci.

Chacune des contre-électrodes 360 à 378 peut être reliée, soit directement, soit indirectement à l'une des contre-électrodes 300 à 359. En effet, comme représenté sur la figure 6, l'une ou plusieurs pistes conductrices 305a, 314a, 323a, 335a et 346a peuvent être formées sur la surface du substrat 251 pour assurer une connexion entre les contre-électrodes 360 à 378 et certaines des contre-électrodes 300 à 359. Les pistes conductrices 305a, 314a, 323a, 335a et 346a sont respectivement reliées aux contre-électrodes 305, 314, 323, 335 et 346.

Sur la figure 6, les contre-électrodes 360 à 378 sont subdivisées en groupes de symboles fixes afin d'afficher, par exemple, des mots comme "OFF", "TIME", etc. au cas où une tension de commutation est appliquée à la fois à toutes les contre-électrodes dans un groupe sélectionné. Dans ce cas, toutes les contre-électrodes d'un groupe, par exemple les contre-électrodes 361 à 363, peuvent être reliées à la même piste conductrice 305a, soit directement, soit par l'intermédiaire d'une autre électrode dans le groupe.

Les contre-électrodes formées sur le substrat 251 peuvent également être subdivisées en plusieurs groupes dont chacun, par exemple les électrodes 305 à 309, est destiné à afficher un symbole d'affichage particulier. Ces groupes d'électrodes peuvent être séparés latéralement les uns par rapport aux autres. Au cas où une partie d'au moins une des électrodes d'affichage 31 à 48 se trouve superposée à l'espace séparant deux groupes d'électrodes, l'ensemble de contre-électrodes sur le substrat 251 peut comprendre en outre au moins une électrode partielle située dans cet espace de manière à pouvoir fonctionner comme partie d'une contre-électrode pour l'une des électrodes d'affichage 31 à 48.

Dans le mode de réalisation des figures 5 et 6, des contre-électrodes partielles sont designées par les références 74a, 74b, 79a, 79b, 89a, 89b, 94a, 99a, 99b, 104a, 109a, 109b, 119a et 124a. Chacune de ces électrodes partielles peut être reliée par une piste conductrice (non représentée) à au moins l'une des contre-électrodes adjacentes.

Bien que l'invention ait été plus particulièrement décrite et représentée en se référant aux modes de réalisation, respectivement des figures 3 et 4 et des figures 5 et 6, les spécialistes de cette technologie comprendront aisément que diverses modifications peuvent leur être apportées sans sortir du cadre, ni s'écarter de l'esprit de l'invention.

Par exemple, le substrat arrière et le substrat avant peuvent être substitués l'un à l'autre. En définitive, les électrodes d'affichage et les contre-électrodes peuvent être substituées les unes aux autres, sans sortir du cadre de l'invention.

## Revendications

1. Dispositif d'affichage comprenant :
- un premier substrat (11;250) et un deuxième substrat (10;251) espacés et en regard l'un de l'autre,
- une couche de cristaux liquides commutables entre deux états qui sont perceptibles optiquement, cette couche étant enfermée dans l'espace délimité entre les premier et deuxième substrats (10,11; 250, 251),
- au moins une première électrode d'affichage (31-48) qui a la forme d'un symbole fixe formée sur la face du premier substrat (11;250) en regard du deuxième substrat (10;251),
- un ensemble de secondes électrodes d'affichage allongées (50-56) formées sur la face du premier substrat (11;250) en regard du deuxième substrat (10;251), ces secondes électrodes (50-56) étant juxtaposées sur ledit premier substrat (11;250) selon une première direction générale sur sensiblement la longueur entière du premier substrat (11;250), et
- un ensemble de contre-électrodes allongées (70-129;300-359) formées sur la face du deuxième substrat (10;251) en regard du premier substrat (11;250), ces contre-électrodes (70-129;300-359) étant juxtaposées sur ledit deuxième substrat (10;251) selon une deuxième direction générale perpendiculaire à la première direction générale sur essentiellement la largeur entière du deuxième substrat (10;251) et superposées aux secondes électrodes d'affichage (50-56) afin de créer un affichage matriciel d'éléments d'affichage destinés à former des symboles d'affichage changeants, celles-ci étant capables d'afficher des symboles d'affichage changeants par l'application sélective d'une tension de commutation entre elles, lesdites contre-électrodes (70-129;300-359) étant également superposées à la ou à chaque première électrode d'affichage (31-48), **caractérisé en ce qu'**au moins deux contre-électrodes de l'ensemble de contre-électrodes (70-129;300-359) sont superposées à ladite au moins une première électrode d'affichage (31-48) pour créer un symbole d'affichage fixe en présence d'une tension de commutation appliquée entre elles, la distance séparant les unes des autres celles des contre-électrodes adjacentes de l'ensemble de contre-électrodes (70-129;300-359) qui sont superposées à ladite au moins une première électrode d'affichage (31-48) étant nettement plus faible que la largeur de ladite première électrode d'affichage (31-48) et **en ce que** lesdites contre-électrodes (70-129; 300-359) sont parallèles entre elles dans chacune des régions définies par les premières (31-48) et secondes (50-56) électrode d'affichage.

2. Dispositif d'affichage selon la revendication 1, **caractérisé en ce que** les contre-électrodes (70-129;300-359) sont réparties en une pluralité de groupes espacés dont chacun est destiné à afficher un symbole d'affichage changeant individuel, ledit ensemble de secondes contre-électrodes (70-129;300-359) comprenant en outre au moins une seconde contre-électrode partielle (746,796,896) reliée à une seconde contre-électrode adjacente, ladite seconde contre-électrode partielle étant située dans l'espace entre des groupes adjacents de secondes contre-électrodes, ladite seconde contre-électrode d'affichage formant ainsi une partie de ladite première contre-électrode.

3. Dispositif d'affichage selon la revendication 1, **caractérisé en ce qu'**il comprend en outre
- au moins une troisième électrode d'affichage (12-30) formée sur la face dudit premier substrat (11;250) en regard dudit deuxième substrat (10;251), lesdites contre-électrodes étant superposées à ladite troisième électrode d'affichage de façon à créer un symbole d'affichage fixe en présence de ladite tension de commutation appliquée entre elles, ladite première et ladite troisième électrodes d'affichage (31-48;12-30) étant situées sur des côtés latéraux opposés dudit ensemble de secondes électrodes d'affichage (70-129;300-359).

## Patentansprüche

1. Anzeigevorrichtung, die umfaßt:
- ein erstes Substrat (11; 250) und ein zweites Substrat (10; 251), die voneinander beabstandet sind und einander gegenüberliegen,
- eine Schicht aus Flüssigkristallen, die zwischen zwei optisch wahrnehmbaren Zuständen umschaltbar sind, wobei diese Schicht in den Raum eingeschlossen ist, der zwischen dem ersten und dem zweiten Substrat (10, 11; 250, 251) begrenzt ist,
- wenigstens eine erste Anzeigeelektrode (31-48), die die Form eines festen Symbols hat, die auf der Fläche des ersten Substrats (11; 250) gegenüber dem zweiten Substrat (10; 251) ausgebildet ist,
- eine Gesamtheit zweiter langgestreckter Anzeigeelektroden (50-56), die auf der Fläche des ersten Substrats (11; 250) gegenüber dem zweiten Substrat (10; 251) ausgebildet sind und auf dem ersten Substrat (11; 250) in einer ersten allgemeinen Richtung im wesentlichen über die gesamte Länge des ersten Substrats (11; 250) nebeneinander angeordnet sind, und
- eine Gesamtheit langgestreckter Gegenelektroden (70-129; 300-359), die auf der Fläche des zweiten Substrats (10; 251) gegenüber dem ersten Substrat (11; 250) ausgebildet sind und auf dem zweiten Substrat (10; 251) in einer zweiten allgemeinen Richtung, die zur ersten allgemeinen Richtung senkrecht ist, im wesentlichen über die gesamte Breite des zweiten Substrats (10; 251) nebeneinander angeordnet und den zweiten Anzeigeelektroden (50-56) überlagert sind, um eine matrixförmige Anzeige aus Anzeigeelementen zu erzeugen, die dazu bestimmt sind, wechselnde Anzeigesymbole zu erzeugen, welche durch wahlweises Anlegen einer Umschaltspannung zwischen ihnen wechselnde Anzeigesymbole bilden können, wobei die Gegenelektroden (70-129; 300-359) außerdem der oder jeder ersten Anzeigeelektrode (31-48) überlagert sind,
**dadurch gekennzeichnet, daß** wenigstens zwei Gegenelektroden der Gesamtheit von Gegenelektroden (70-129; 300-359) der wenigstens einen ersten Anzeigeelektrode (31-48) überlagert sind, um ein festes Anzeigesymbol bei Vorhandensein einer zwischen ihnen angelegten Umschaltspannung zu erzeugen, wobei der Abstand, der die einen von den anderen benachbarten Gegenelektroden der Gesamtheit von Gegenelektroden (70-129; 300-359), die der wenigstens einen ersten Anzeigeelektrode (31-48) überlagert sind, trennt, deutlich kleiner als die Breite der ersten Anzeigeelektrode (31-48) ist und daß die Gegenelektroden (70-129; 300-359) in jedem der Bereiche, die durch die ersten (31-48) und zweiten (50-56) Anzeigeelektroden definiert sind, zueinander parallel sind.

2. Anzeigevorrichtung nach Anspruch 1, **dadurch gekennzeichnet, daß** die Gegenelektroden (70-129; 300-359) in mehreren beabstandeten Gruppen verteilt sind, wovon jede dazu bestimmt ist, ein einzelnes wechselndes Anzeigesymbol anzuzeigen, wobei die Gesamtheit von zweiten Gegenelektroden (70-129; 300-359) außerdem wenigstens eine zweite partielle Gegenelektrode umfaßt, die mit einer benachbarten zweiten Gegenelektrode verbunden ist, wobei sich die zweite partielle Gegenelektrode in dem Raum zwischen benachbarten Gruppen von zweiten Gegenelektroden befindet, wobei die zweite Anzeigegegenelektrode somit einen Teil der ersten Gegenelektrode bildet.

3. Anzeigevorrichtung nach Anspruch 1, **dadurch gekennzeichnet, daß** sie außerdem umfaßt:
- wenigstens eine dritte Anzeigeelektrode (12-30), die auf der Fläche des ersten Substrats (11; 250) gegenüber dem zweiten Substrat (10; 251) gebildet ist, wobei die Gegenelektroden der dritten Anzeigeelektrode in der Weise überlagert sind, daß bei Vorhandensein der zwischen ihnen angelegten Umschaltspannung ein festes Anzeigesymbol erzeugt wird, wobei sich die ersten und dritten Anzeigeelektroden (31-48; 12-30) auf den Seiten befinden, die der Gesamtheit von zweiten Anzeigeelektroden (70-129; 300-359) gegenüberliegen.

## Claims

1. Display device comprising :
- a first substrate (11;250) and a second substrate (10;251) spaced apart and facing each other,
- a liquid crystal film switchable between two states which are optically perceptible, said film being enclosed in the space delimited by said first and second substrates (10,11; 250,251),
- at least a first display electrode (31-48) in the form of a fixed symbol formed on the face of said first substrate (11;250) which faces said second substrate (10;251),
- a set of second elongated display electrodes (50-56) formed on the face of said first substrate (11;250) facing said second substrate (10;251), these second electrodes (50-56) being juxtaposed on said first substrate (11;250) in a first general direction across substantially the entire length of the first substrate (11;250), and
- a set of elongated counter-electrodes (70-129; 300-359) formed on the face of the second substrate (10;251) facing the first substrate (11;250), these counter-electrodes (70-129; 300-359) being juxtaposed on said second substrate (10;251) in a second general direction perpendicular to the first general direction across substantially the entire width of said second substrate (10;251) and superposed with said second display electrodes (50-56) so as to create a matrix of display elements for forming changeable display symbols so as to be capable of displaying therewith symbols which are changeable by selective application of a switching voltage therebetween, said counter-electrodes (70-129; 300-359) being also superposed with the or with each first display electrode (31-48), **characterized in that** at least two counter-electrodes of the set of counter-electrodes (70-129; 300-359) are superposed with said at least one first display electrode (31-48) so as to create a fixed display symbol when a switching voltage is applied therebetween, the distance separating one another those of the adjacent counter-electrodes of the set of counter-electrodes (70-129; 300-359) which are superposed with said at least one first display electrode (31-48) being substantially less than the width of said first display electrode (31-48) and **in that** said counter-electrodes (70-129; 300-359) are parallel to each other in each of the regions defined by the first (31-45) and second (50-56) display electrodes.

2. Display device according to claim 1, **characterized in that** said counter-electrodes (70-129; 300-389) are divided into a plurality of spaced-apart groups, each group intended to display an individual changeable display symbol, said set of counter-electrodes (70-129; 300-359) further comprising at least a second counter-electrode part (746, 796, 896) connected to a second adjacent counter-electrode, said second counter-electrode part being positioned in the space between adjacent groups of second counter-electrodes, said second display counter-electrode thus forming part of said first counter-electrode.

3. Display device according to claim 1, **characterized in that** it further comprises :
- at least a third display electrode (12-30) formed on the face of said first substrate (11;250) facing said second substrate (10;251), said counter electrodes being superposed with said third display electrode so as to create a fixed display symbol when said switching voltage is applied therebetween, said first and said third display electrodes (31-48; 12-30) being positioned on opposing lateral sides of said set of second display electrodes (70-129; 300-359).
